# EUROPEAN PATENT SPECIFICATION

(11) **EP 2 451 120 B1**
(45) Date of publication and mention of the grant of the patent: **15.03.2017**
(21) Application number: 09848893.5
(22) Date of filing: 22.12.2009
(51) Int. Cl.: H04L 12/26

(54) **METHOD FOR ACCESSING WIRELESS DISTRIBUTION SYSTEM, SYSTEM AND WIRELESS REPEATER THEREOF**
VERFAHREN FÜR DEN ZUGANG ZU EINEM DRAHTLOSEN VERTEILUNGSSYSTEM, SYSTEM UND DRAHTLOSER REPEATER DAFÜR
PROCÉDÉ D'ACCÈS À UN SYSTÈME DE DISTRIBUTION SANS FIL, SYSTÈME ET RÉPÉTEUR SANS FIL ASSOCIÉ

(30) Priority: 01.09.2009 CN 200910171632
(43) Date of publication of application: 09.05.2012
(73) Proprietor: ZTE Corporation, Shenzhen, Guangdong 518057 (CN)
(72) Inventor: WANG, Zhanli, Guangdong 518057 (CN)
(74) Representative: Onsagers AS
(86) International application number: PCT/CN2009/075839
(87) International publication number: WO 2011/026288

(56) References cited:
- CN-A- 101 286 909
- US-A1- 2005 041 596
- US-A1- 2007 008 889
- US-A1- 2007 008 889
- US-A1- 2007 025 372
- US-A1- 2008 008 148
- "Fritz Fritzibox Fon WLAN 7270. Installation, Configuration and operation", MANUAL FRITZ,, 1 August 2009 (2009-08-01), pages 1-193, XP007916252,
- JEFF BERSTEIN ET AL: "CPE WAN Management Protocol", TECHNICAL REPORT, FORUM TR-069,, 1 May 2004 (2004-05-01), pages 1-109, XP008128969,

## Description

### Field of the Invention

The present invention relates to the communication field, and in particular to a method and a system for accessing a wireless distribution system (WDS), and a wireless repeater.

### Background of the Invention

Wireless local area network has been widely used as an access technology for network terminals, because of its advantages of high access speed, simple wiring, etc. There can be some complicated service situations. For example, a user uses a wireless router on a two-story house and the router is placed on the first floor, which causes the signal in some rooms upstairs to be weakened; and for another example, a user wishes to share broadband with his neighbor in the next door but the obstacles between them make the wiring inconvenient and the laptop accessing the neighbor's wireless network is frequently disconnected. In such complicated situations, two WDS-supporting wireless repeat devices can be used to extend wireless network coverage and solve the network use problem.

In general, one of the two above mentioned WDS-supporting wireless devices is referred to as a wireless access point, or simply referred to as AP, while the other is referred to as a wireless repeater, or simply referred to as Repeater. The wireless access point accesses the Internet through the broadband access technologies (such as xDSL, xPON, 3G and other broadband access technologies) which it supports. The wireless repeater performs wireless relay to the wireless access point via the WDS, and forwards a message of a wireless repeater user accessing the Internet to the wireless access point through bridging via a WDS wireless interface, and the wireless access point sends this user message to the Internet. Then, the wireless access point further forwards a message responded from the Internet to the wireless repeater via the WDS wireless interface, and the wireless repeater further sends this message to this user through bridging.

In the systems for accessing a WDS in relevant art, the wireless repeater is only used for forwarding messages between a wireless access point AP and a user, while the AP serves to assign the routes. Since the assignable routing addresses of the AP are limited, the total number of users who can access a plurality of wireless repeaters is limited to the number of assignable routing addresses of the AP. Thus, when the number of accessing users increases, more APs will be needed, which would be difficult to configure since the APs are located at the system network side. "Fritz Fritz!Box Fon WLAN 7270. Installation, Configuration and operation", MANUAL FRITZ, August 2009, is an installation, configuration and operation guide for the Fritz!Box DSL modem/WLAN access point. The wireless network of the Fritz!Box used as a Base station may be expanded to a Wireless Distribution System (WDS) with up to four WLAN access points that may be implemented as repeaters in the WDS.
US 2007/025372 A1 relates to a method and system for remotely managing a bridge device, such as a modem. Management traffic from a service provider can be communicated to a bridge device which lacks a public IP address by sending the management traffic through the bridge device to a router of a LAN. The router then sends the management trafiic back to the bridge device. Thus, the service provider can perform management tasks such as troubleshooting, health monitoring, accounting, provisioning, security and firmware upgrades in a manner that is transparent to the user.
US 2007/008889 A1 relates to a WDS repeater in a WLAN. The WDS repeater includes: a controller adapted to compare a wireless link rate of a WLAN signal received from an AP of the WLAN to a wireless link rate threshold registered in a wireless link rate table, and to display a connectability status of the wireless link according to the comparison result. A method of displaying a WDS link status in a WLAN system includes: detecting a wireless link rate of a WLAN signal received from an AP; comparing the detected wireless link rate to a wireless link rate threshold registered in a wireless link rate table; and displaying an ability to establish a connection when the detected wireless link rate is equal to or greater than the wireless link rate threshold.
US 2005/041596 A1 relates to a relay device capable of performing dynamic port forward setting to open a port even if performing a connection in two stages and being connected to a network and a port forward setting method, and relates to a router for relaying a data packet which has such a structure as to comprise a control portion for giving a port forward setting request to an upper router to perform the port forward setting of the upper router and to relate port forward setting for a CP4 to port forward setting of a router upon receipt of the port forward setting request from the CP4 when a WAN side I/F portion is connected to an internet 1 through the upper router 2 and a LAN side I/F portion is connected to the CP4.
Jeff Berstein et al., "CPE WAN Management Protocol", Technical Report, Forum TR-069, 1. May 2004 , relates to a protocol for communication between a CPE and Auto-Configuration Server (ACS) that encompasses secure auto-configuration as well as other CPE management functions within a common framework.

### Summary of the Invention

The object of the present invention is to provide a method and a system for accessing a wireless distribution system, which is capable of solving the technical problem in relevant art that when the number of accessing users increases, more APs need to be added, and it is difficult to configure these APs.

A system for accessing a wireless distribution system is provided according to anaspect of the present invention, comprising: a wireless access point and a wireless repeater, wherein the wireless repeater comprising: a dialing module, configured to acquire an IP address for the wireless repeater; said wireless repeater acquiring the IP address for Internet access by manner of IPoE dialing; and a routing and forwarding module, configured to use the IP address to forward the data transmitted between the Internet and a user equipment.

Preferably, the dialing module comprises: a sending unit, configured to send a request to the Internet, with the request carrying the identification of the wireless repeater; a receiving unit, configured to receive an allocated IP address; and a configuring unit, configured to set the received IP address as an IP address of the wireless repeater.

Preferably, the wireless repeater further comprises: a wireless distribution system interface module, configured to perform wireless relay to a wireless access point of the wireless distribution system; and a user interface module, configured to access the user equipment.

Preferably, the wireless access point comprises: a forwarding module , configured to forward the data transmitted between the Internet and the wireless repeater.

Preferably, said data comprises unicast data, multicast data and broadcast data.

Preferably, said data is unicast data, and said routing and forwarding module forwards the data transmitted between the Internet and the user equipment according to said IP address.

A method for accessing a wireless distribution system is also provided according to another aspect of the present invention, comprising: acquiring an IP address for a wireless repeater, said wireless repeater acquiring the IP address for Internet access by manner of IPoE dialing; and accessing the wireless repeater into the Internet via a wireless access point according to the IP address.

Preferably, the wireless repeater accessing the Internet via a wireless access point according to the IP address in particular comprises: establishing wireless relay between the wireless repeater and the wireless access point; connecting the wireless access point into the Internet; user equipment sending an Internet access message to the wireless repeater, the wireless repeater routing and forwarding this message to the wireless access point; the wireless access point sending the message to the Internet; the Internet returning a corresponding response message according to the message and sending the response message to the wireless access point; the wireless access point sending the response message to the wireless repeater; and the wireless repeater routing and forwarding the response message to the user equipment.

Through at least one of the above technical solutions, the wireless repeater is provided with routing and forwarding function by acquiring an IP address for the wireless repeater with a dialing module. Thus the number of users accessible to the system can be increased by adding wireless repeaters at user side without adding any APs when the number of the users accessing the system is relatively large. Therefore the present invention avoids the technical problem that when the number of accessing users increases, more APs need to be added and it is difficult to configure these APs, and achieves the technical effect of being able to conveniently increase accessible users.

### Brief Description of the Drawings

The drawings herein are used to provide a further understanding of the present invention and form a part of the specification. The drawings are used to explain the present invention together with the embodiments of the present invention, and do not constitute undue limitation on the scope of the present invention. In the drawings:
Fig.1 is a block diagram of a wireless repeater according to the first embodiment of the present invention;
Fig.2 is a block diagram of a system for accessing a wireless distribution system according to the second embodiment of the present invention;
Fig.3 is a flow chart of a method for accessing a wireless distribution system according to the third embodiment of the present invention; and
Fig.4 is a flow chart of a method for accessing a wireless distribution system according to the fourth embodiment of the present invention.

### Detailed Description of the Embodiments

The preferred embodiments of the invention will be described in conjunction with the drawings, and it shall be understood that the preferred embodiments described hereinafter are only to illustrate, and not to limit the present invention.

For the purpose of explanation, several specific details are described in the description below to offer a thorough understanding of the present invention. However, it is apparent that the present invention can be implemented even without these specific details. Additionally, the following embodiments and the details of these embodiments can be combined variously if there is no conflict, i.e. without departing from the scope interpreted by the appended claims.

### First embodiment

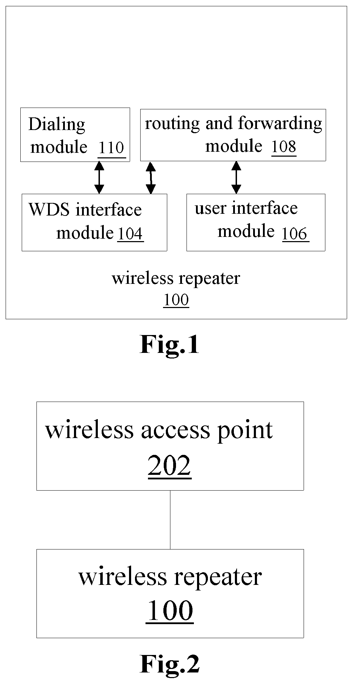

Fig.1 is a block diagram of a wireless repeater according to the first embodiment of the present invention.

As shown in Fig.1, a wireless repeater 100 according to the first embodiment of the present invention comprises: a dialing module 110, configured to acquire an IP address for the wireless repeater; and a routing and forwarding module 108, configured to use the IP address to forward the data transmitted between the Internet and a user equipment.

The wireless repeater according to the first embodiment of the present invention acquires a routing address for the wireless repeater with the dialing module. It can increase the number of users accessible to the system by adding wireless repeaters at user side without needing to add any APs when the number of the users accessing the system is relatively large. Thus, it avoids the technical problem that when the number of accessing users increases, more APs need to be added and it is difficult to configure these APs, and achieves the technical effect of being able to conveniently increase accessible users.

For example, in relevant art, the number of distributable routing addresses for an AP is 255. Thus the maximum number of the users who access this AP via N wireless repeaters is 255. While the maximum number of the users who access this AP via N wireless repeaters in the system for accessing a wireless distribution system according to the first embodiment of the present invention will be N*255. Moreover, when the number of users increases, it only needs to increase the number of wireless repeaters to achieve the object of increasing accessing users.

Additionally, the wireless repeater according to the first embodiment of the present invention reduces the functional requirements for the wireless access point by the users who access via the wireless repeater. When the users access the Internet by using routing mode, since the routing mode has already been achieved on the wireless repeater, it is no longer necessary for the wireless access point to provide access by manner of routing, which makes the networking and application more flexible.

Additionally, the wireless repeater according to the first embodiment of the present invention can further simplify the functional requirements and interface requirements for the wireless access point and wireless repeater, thus achieving the object of reducing the costs. The wireless access point provides broadband access technologies (such as xDSL, xPON, 3G and other access technologies) in the uplink, and provides WDS wireless relay and user access in the downlink, and bridges and forwards a message of a user accessing the Internet. The wireless repeater only provides WDS wireless relay in the uplink and provides user access in the downlink and bridges or routes and forwards a message from a user. That is to say, the AP in the system for accessing a wireless distribution system according to the first embodiment of the present invention only needs to implement the functions of data forwarding and protocol conversion; thus achieves the technical effects of simplifying the form of devices and reducing the total costs.

Preferably, the dialing module comprises: a sending unit, configured to send a request to the Internet, with the request carrying the identification of the wireless repeater; a receiving unit, configured to receive an allocated IP address; and a configuring unit, configured to set the received IP address as an IP address of the wireless repeater.

The wireless repeater supports a routing module and a dialing module (such as PPPoE, IPoE and other dialing modules) thereon. After the WDS connection between a wireless repeater and a wireless access point device is successful, the wireless repeater initiates a dialing to acquire an IP address for accessing the Internet through a WDS wireless interface and via the wireless access point device. A message of a wireless repeater user is forwarded by the routing module of the wireless repeater, sent to the wireless access point device through the WDS wireless interface, and then to the Internet.

Preferably, the wireless repeater further comprises: a WDS interface module 104, configured to perform wireless relay to a wireless access point of the wireless distribution system; and a user interface module 106, configured to access the user equipment.

The WDS interface module is configured to carry out the WDS wireless relay to the wireless access point, wherein a message from the wireless repeater is sent to the wireless access point via the WDS interface, while a message from the wireless access point is sent to the wireless repeater via the WDS interface. The user interface module is configured to carry out the access of a wireless repeater user, in which the user carries out the sending/receiving of the messages to/from the wireless repeater via the user interface module. This is to achieve the object of allowing the user to access the Internet by using a wireless repeater.

Preferably, said data comprises unicast data, multicast data and broadcast data.

Preferably, said data is unicast data, and said routing and forwarding module forwards the data transmitted between the Internet and the user equipment according to said IP address.

As the multicast and broadcast IP messages are sent in group, they can be received by a repeater even if the repeater has not acquired a public network IP for accessing the Internet. The routing and forwarding of unicast data is limited by whether the repeater has acquired an external network IP address, while multicast and broadcast are not. Thus, only after the repeater has acquired an IP address for accessing the external network, all kinds of messages (unicast, multicast, broadcast) can be transmitted between the Internet and the user as well as between the Internet and the repeater via the routing and forwarding module.

The wireless repeater according to the first embodiment of the present invention avoids the technical problem that when the number of accessing users increases, more APs need to be added and it is difficult to configure these APs. Thus, it can achieve the technical effect of being able to conveniently increase accessible users.

### Second embodiment

Fig.2 is a block diagram of a system for accessing a wireless distribution system according to the second embodiment of the present invention.

As shown in Fig.2, the system for accessing a wireless distribution system according to the second embodiment of the present invention comprises: a wireless access point 202 and a wireless repeater 100, wherein the wireless repeater 100 comprises: a dialing module, configured to acquire an IP address for the wireless repeater; and a routing and forwarding module, configured to us the IP address to forward the data transmitted between the Internet and a user equipment.

By allocating an IP address for the wireless repeater, the system for accessing a wireless distribution system according to the second embodiment of the present invention makes it possible to increase the number of users accessible to the system by adding wireless repeaters at user side without adding any APs when the user number of the access system is relatively large. Thus it avoids the technical problem that when the number of accessing users increases more APs need to be added and it is difficult to configure these APs, and achieves the technical effect of being able to conveniently increase accessible users.

Preferably, the dialing module comprises: a sending unit, configured to send a request to the Internet, with the request carrying the identification of the wireless repeater; a receiving unit, configured to receive an allocated IP address; and a configuring unit, configured to set the received IP address as an IP address of the wireless repeater.

The wireless repeater supports a routing module and a dialing module (such as PPPoE, IPoE and other dialing modules) thereon. After the WDS connection between a wireless repeater and a wireless access point device is successful, the wireless repeater initiates a dialing to acquire an IP address for accessing the Internet via a WDS wireless interface and the wireless access point device. The message from a wireless repeater user is forwarded by the routing module of the wireless repeater, sent to the wireless access point device through the WDS wireless interface, and then to the Internet.

Preferably, the wireless repeater further comprises: a wireless distribution system interface module, configured to perform wireless relay to a wireless access point of the wireless distribution system; and a user interface module, configured to access a user equipment.

The WDS interface module is configured to carry out the WDS wireless relay to the wireless access point. Messages from the wireless repeater are sent to the wireless access point via the WDS interface while messages from the wireless access point are sent to the wireless repeater via the WDS interface. The user interface module is configured to carry out the access of a wireless repeater user, and the user carries out the sending/receiving of the messages to/from the wireless repeater via the user interface module. This is to achieve the object of allowing a user equipment to access the Internet by using a wireless repeater.

Preferably, the wireless access point comprises: a forwarding module , configured to forward the data transmitted between the Internet and the wireless repeater.

Preferably, said data comprises unicast data, multicast data and broadcast data.

Preferably, said data is unicast data, and said routing and forwarding module forwards the data transmitted between the Internet and the user equipment according to said IP address.

As the multicast or broadcast IP messages are sent in group, they can be received by the repeater even if the repeater has not acquired a public network IP for accessing the Internet. The routing and forwarding of unicast data is limited by whether the repeater has acquired an external network IP address, while multicast and broadcast are not. Thus, only after the repeater has acquired an IP address for accessing the external network, all kinds of messages (unicast, multicast, broadcast) can be transmitted between the Internet and the user as well as between the Internet and the repeater via the routing and forwarding module.

The system for accessing a wireless distribution system according to the second embodiment of the present invention avoids the technical problem that when the number of accessing users increases more APs need to be added and it is difficult to configure these APs, and thus achieves the technical effect of being able to conveniently increase accessible users.

### Third Embodiment

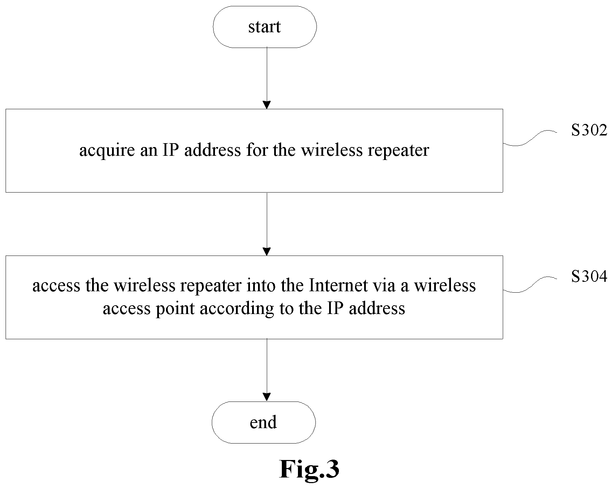

Fig.3 is a flow chart of a method for accessing a wireless distribution system according to the third embodiment of the present invention. This method can be achieved by the above system for accessing a wireless distribution system and the above wireless repeater. As shown in Fig.3, the method for accessing a wireless distribution system according to the third embodiment of the present invention comprises:
Step S302: Acquire an IP address for the wireless repeater; and the wireless repeater is able to acquire an IP address for Internet access by the dialing manners of PPPoE, IPoE, etc.;
Step S304: Access the wireless repeater into the Internet via a wireless access point according to the IP address; establish wireless relay between the wireless repeater and the wireless access point; connect the wireless access point into the Internet; user equipment sends a message for Internet access to the wireless repeater, and the wireless repeater routes and forwards this message to the wireless access point; the wireless access point sends this message to the Internet; the Internet returns a corresponding response message according to this message and sends the response message to the wireless access point; the wireless access point sends the response message to the wireless repeater; and the wireless repeater routes and forwards the response message to the user equipment.

By allocating a routing address for the wireless repeater, the method for accessing a wireless distribution system according to the third embodiment of the present invention makes it possible to increase the number of users accessible to the system by adding wireless repeaters at user side without needing to add any APs when the number of the users accessing system is relatively large. Thus it avoids the technical problem that when the number of accessing users increases, more APs need to be added and it is difficult to configure these APs, and achieves the technical effect of being able to conveniently increase accessible users.

The method for accessing a wireless distribution system according to the third embodiment of the present invention avoids the technical problem that when the number of accessing users increases more APs need to be added and it is difficult for configuring, thus achieving the technical effect of being able to conveniently increase accessible users.

### Fourth Embodiment

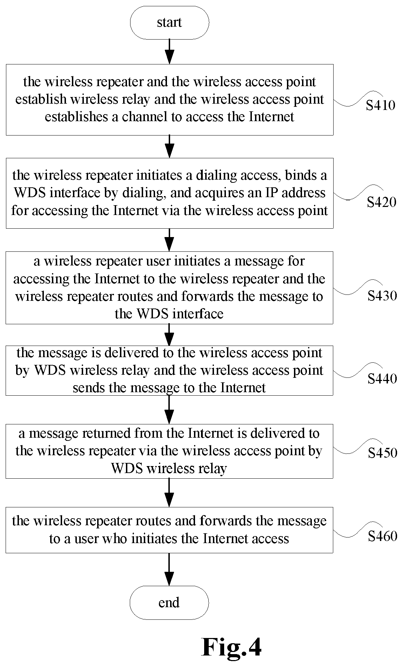

Fig.4 is a flow chart of a method for accessing a wireless distribution system according to the fourth embodiment of the present invention. As shown in Fig.4, the method for accessing a wireless distribution system according to the fourth embodiment of the present invention comprises:
Step S410: Establish WDS wireless relay between the wireless repeater and the wireless access point, and the wireless access point establishes a channel for Internet access;
Step S420: The wireless repeater initiates a dialing access, binds a WDS interface by dialing, and acquires an IP address for Internet access via the wireless access point;
Step S430: The message for Internet access initiated by the wireless repeater user arrives at the wireless repeater, and the wireless repeater forwards the message to the WDS interface;
Step S440: The message is delivered to the wireless access point by WDS wireless relay, and the wireless access point sends the message to the Internet;
Step S450: A message returned from the Internet is delivered to the wireless repeater via the wireless access point by WDS wireless relay; and
Step S460: The wireless repeater routes and forwards the message and sends it to a user who initiates this Internet access.

The method for accessing a wireless distribution system according to the fourth embodiment of the present invention avoids the technical problem that when the number of accessing users increases more APs need to be added and it is difficult to configure these APs, and thus achieves the technical effect of being able to conveniently increase accessible users.

In summary, the method and system for accessing a wireless distribution system as well as the wireless distribution system according to the embodiments of the present invention avoid the technical problem that when the number of accessing users increases more APs need to be added and it is difficult to configure, and thus achieves the technical effect of being able to conveniently increase accessible users.

Apparently, those skilled in the art should understand that the above-mentioned modules and steps of the present invention can be realized by using general purpose calculating device, can be integrated in one calculating device or distributed on a network which consists of a plurality of calculating devices, and alternatively can be realized by using the executable program code of the calculating device, so that consequently they can be stored in the storing device and executed by the calculating device; or they can be made into integrated circuit module respectively, or a plurality of modules or steps thereof are made into one integrated circuit module. In this sense, the present invention is not restricted to any particular hardware and software combination.

Above description is only to illustrate the preferred embodiments but not to limit the present invention. Any amendments, equivalent substitutions, improvements etc. within the basic idea and principle of the present invention are all included in the scope of the present invention.

## Claims

1. A system comprising a wireless access point (202) and a wireless repeater (100) for accessing a wireless distribution system, wherein said wireless
repeater comprises:
a dialing module (110), configured to acquire an IP address for said wireless repeater, said wireless repeater acquiring the IP address for Internet access by manner of IPoE dialing; and
a routing and forwarding module (108) configured to use said IP address to forward the data transmitted between the Internet and the user equipment;
**characterized in that** using said IP address to forward the data transmitted between the Internet and the user equipment comprises:
establishing wireless relay between said wireless repeater and said wireless access point;
connecting said wireless access point to said Internet;
said user equipment being configured to send a message for Internet access to said wireless repeater, and said wireless repeater routing and forwarding said message to said wireless access point;
said wireless access point being configured to send said message to said Internet;
said Internet returning a corresponding response message according to said message and sending said response message to said wireless access point;
said wireless access point being configured to send said response message to said wireless repeater; and
said wireless repeater being configured to route and forward said response message to said user equipment.

2. The system according to Claim 1, **characterized in that** said dialing module comprises:
a sending unit, configured to send a request to the Internet, with the request carrying the identification of said wireless repeater;
a receiving unit, configured to receive an allocated IP address; and
a configuring unit, configured to set said received IP address as an IP address of said wireless repeater.

3. The system according to Claim 1, **characterized in that** said wireless repeater further comprises:
a wireless distribution system interface module, configured to perform wireless relay to a wireless access point of the wireless distribution system; and
a user interface module, configured to access said user equipment.

4. The system according to Claim 1, **characterized in that** said wireless access point comprises:
a forwarding module, configured to forward the data transmitted between said Internet and said wireless repeater.

5. The system according to Claim 1, **characterized in that** said data comprises unicast data, multicast data, and broadcast data.

6. The system according to Claim 1, **characterized in that** said data is unicast data and said routing and forwarding module forwards the data transmitted between the Internet and the user equipment according to said IP address.

7. A method for accessing a wireless distribution system, **characterized by** comprising:
acquiring (S302) an IP address for a wireless repeater (100) said wireless repeater acquiring the IP address for Internet access by manner of IPoE dialing; and
accessing (S304) said wireless repeater into the Internet via a wireless access point (202) according to said IP address;
wherein the step of accessing said wireless repeater into the Internet via a wireless access point according to said IP address comprises:
establishing wireless relay between said wireless repeater and said wireless access point;
connecting said wireless access point to said Internet;
said user equipment sending a message for Internet access to said wireless repeater, and said wireless repeater routing and forwarding said message to said wireless access point;
said wireless access point sending said message to said Internet;
said Internet returning a corresponding response message according to said message and sending said response message to said wireless access point;
said wireless access point sending said response message to said wireless repeater; and
said wireless repeater routing and forwarding said response message to said user equipment.

## Patentansprüche

1. System mit einem Funk-Zugangspunkt (202) und einem Funk-Repeater (100) zum Zugang zu einem Funkverteilungssystem, wobei der Funk-Repeater umfasst:
ein Einwählmodul (110), das dazu konfiguriert ist, eine IP-Adresse für den Funk-Repeater zu erlangen, wobei der Funk-Repeater die IP-Adresse für einen Internetzugang mittels IPoE-Einwahl erlangt; und
ein Routing- und Weiterleitungsmodul (108), das dazu konfiguriert ist, die IP-Adresse zum Weiterleiten der zwischen dem Internet und dem Benutzergerät übertragenen Daten zu verwenden;
**dadurch gekennzeichnet, dass**
das Verwenden der IP-Adresse zum Weiterleiten der zwischen dem Internet und dem Benutzergerät übertragenen Daten umfasst:
Herstellen einer Funkverbindung zwischen dem Funk-Repeater und dem Funk-Zugangspunkt;
Verbinden des Funk-Zugangspunkts mit dem Internet;
wobei das Benutzergerät dazu konfiguriert ist, eine Nachricht für einen Internetzugang an den Funk-Repeater zu schicken, und der Funk-Repeater die Nachricht zum Funk-Zugangspunkt routet und an diesen weiterleitet;
wobei der Funk-Zugangspunkt dazu konfiguriert ist, die Nachricht an das Internet zu schicken;
wobei das Internet eine entsprechende Antwortnachricht je nach der Nachricht zurückschickt und die Antwortnachricht an den Funk-Zugangspunkt schickt;
wobei der Funk-Zugangspunkt dazu konfiguriert ist, die Antwortnachricht an den Funk-Repeater zu schicken; und
wobei der Funk-Repeater dazu konfiguriert ist, die Antwortnachricht zum Benutzergerät zu routen und an dieses weiterzuleiten.

2. System nach Anspruch 1, **dadurch gekennzeichnet, dass** das Einwählmodul umfasst:
eine Sendeeinheit, die dazu konfiguriert ist, eine Anfrage an das Internet zu schicken, wobei die Anfrage die Kennung des Funk-Repeaters enthält;
eine Empfangseinheit, die dazu konfiguriert ist, eine zugeteilte IP-Adresse zu empfangen; und
eine Konfigurierungseinheit, die dazu konfiguriert ist, die empfangene IP-Adresse als eine IP-Adresse des Funk-Repeaters einzustellen.

3. System nach Anspruch 1, **dadurch gekennzeichnet, dass** der Funk-Repeater darüber hinaus umfasst:
ein Funkverteilungssystemschnittstellenmodul, das dazu konfiguriert ist, eine Funkübertragung zu einem Funk-Zugangspunkt des Funkverteilungssystems zu bewerkstelligen; und
ein Benutzerschnittstellenmodul, das dazu konfiguriert ist, auf das Benutzergerät zuzugreifen.

4. System nach Anspruch 1, **dadurch gekennzeichnet, dass** der Funk-Zugangspunkt umfasst:
ein Weiterleitungsmodul, das dazu konfiguriert ist, die zwischen dem Internet und dem Funk-Repeater übertragenen Daten weiterzuleiten.

5. System nach Anspruch 1, **dadurch gekennzeichnet, dass** die Daten Unicast-Daten, Multicast-Daten und Broadcast-Daten umfassen.

6. System nach Anspruch 1, **dadurch gekennzeichnet, dass** die Daten Unicast-Daten sind und das Routing- und Weiterleitungsmodul die zwischen dem Internet und dem Benutzergerät übertragenen Daten je nach der IP-Adresse weiterleitet.

7. Verfahren zum Zugreifen auf ein Funkverteilungssystem, **dadurch gekennzeichnet, dass** es umfasst:
Erlangen (S302) einer IP-Adresse für einen Funk-Repeater (100), wobei der Funk-Repeater die IP-Adresse für einen Internetzugang mittels IPoE-Einwahl erlangt; und
Zugang (S304) des Funk-Repeaters in das Internet über einen Funk-Zugangspunkt (202) je nach der IP-Adresse;
wobei der Schritt des Zugangs des Funk-Repeaters in das Internet über einen Funk-Zugangspunkt je nach der IP-Adresse umfasst:
Herstellen einer Funkverbindung zwischen dem Funk-Repeater und dem Funk-Zugangspunkt;
Verbinden des Funk-Zugangspunkts mit dem Internet;
wobei das Benutzergerät eine Nachricht für einen Internetzugang an den Funk-Repeater schickt, und der Funk-Repeater die Nachricht zum Funk-Zugangspunkt routet und an diesen weiterleitet;
wobei der Funk-Zugangspunkt die Nachricht an das Internet schickt;
wobei das Internet eine entsprechende Antwortnachricht je nach der Nachricht zurückschickt und die Antwortnachricht an den Funk-Zugangspunkt schickt;
wobei der Funk-Zugangspunkt die Antwortnachricht an den Funk-Repeater schickt; und
wobei der Funk-Repeater die Antwortnachricht zum Benutzergerät routet und an dieses weiterleitet.

## Revendications

1. Système comprenant un point d'accès sans fil (202) et un répéteur sans fil (100) pour accéder à un système de distribution sans fil, dans lequel ledit répéteur sans fil comprend :
un module de composition (110), configuré pour acquérir une adresse IP pour ledit répéteur sans fil, ledit répéteur sans fil acquérant l'adresse IP pour un accès Internet par une manière de composition IPoE ; et
un module de routage et de transfert (108) configuré pour utiliser ladite adresse IP pour transférer les données transmises entre l'Internet et l'équipement d'utilisateur ;
**caractérisé en ce que**
l'utilisation de ladite adresse IP pour transférer les données transmises entre l'Internet et l'équipement d'utilisateur comprend :
l'établissement d'un relais sans fil entre ledit répéteur sans fil et ledit point d'accès sans fil ;
la connexion dudit point d'accès sans fil audit Internet ;
ledit équipement d'utilisateur étant configuré pour envoyer un message pour un accès Internet audit répéteur sans fil, et ledit répéteur sans fil routant et transférant ledit message audit point d'accès sans fil ;
ledit point d'accès sans fil étant configuré pour envoyer ledit message audit Internet ;
ledit Internet renvoyant un message de réponse correspondant selon ledit message et envoyant ledit message de réponse audit point d'accès sans fil ;
ledit point d'accès sans fil étant configuré pour envoyer ledit message de réponse audit répéteur sans fil ; et
ledit répéteur sans fil étant configuré pour router et transférer ledit message de réponse audit équipement d'utilisateur.

2. Système selon la revendication 1, **caractérisé en ce que** ledit module de composition comprend :
une unité d'envoi, configurée pour envoyer une requête à l'Internet, la requête transportant l'identification dudit répéteur sans fil ;
une unité de réception, configurée pour recevoir une adresse IP attribuée ; et
une unité de configuration, configurée pour définir ladite adresse IP reçue en tant qu'une adresse IP dudit répéteur sans fil.

3. Système selon la revendication 1, **caractérisé en ce que** ledit répéteur sans fil comprend en outre :
un module d'interface de système de distribution sans fil, configuré pour réaliser un relais sans fil vers un point d'accès sans fil du système de distribution sans fil ; et
un module d'interface utilisateur, configuré pour accéder audit équipement d'utilisateur.

4. Système selon la revendication 1, **caractérisé en ce que** ledit point d'accès sans fil comprend :
un module de transfert, configuré pour transférer les données transmises entre ledit Internet et ledit répéteur sans fil.

5. Système selon la revendication 1, **caractérisé en ce que** lesdites données comprennent des données d'unidiffusion, des données de multidiffusion et des données de diffusion.

6. Système selon la revendication 1, **caractérisé en ce que** lesdites données sont des données d'unidiffusion et ledit module de routage et de transfert transfère les données transmises entre l'Internet et l'équipement d'utilisateur selon ladite adresse IP.

7. Procédé pour accéder à un système de distribution sans fil, **caractérisé en ce qu'**il comprend :
l'acquisition (S302) d'une adresse IP pour un répéteur sans fil (100), ledit répéteur sans fil acquérant l'adresse IP pour un accès Internet par une manière de composition IPoE ; et
l'accès (S304) audit répéteur sans fil dans l'Internet via un point d'accès sans fil (202) selon ladite adresse IP ;
dans lequel l'étape d'accès audit répéteur sans fil dans l'Internet via un point d'accès sans fil selon ladite adresse IP comprend :
l'établissement d'un relais sans fil entre ledit répéteur sans fil et ledit point d'accès sans fil ;
la connexion dudit point d'accès sans fil audit Internet ;
ledit équipement d'utilisateur envoyant un message pour un accès Internet audit répéteur sans fil, et ledit répéteur sans fil routant et transférant ledit message audit point d'accès sans fil ;
ledit point d'accès sans fil envoyant ledit message audit Internet ;
ledit Internet renvoyant un message de réponse correspondant selon ledit message et envoyant ledit message de réponse audit point d'accès sans fil ;
ledit point d'accès sans fil envoyant ledit message de réponse audit répéteur sans fil ; et
ledit répéteur sans fil routant et transférant ledit message de réponse audit équipement d'utilisateur.
